(19) Europäisches Patentamt
European Patent Office
Office européen des brevets

(11) **EP 3 555 696 B1**

(12) **EUROPEAN PATENT SPECIFICATION**

(45) Date of publication and mention
of the grant of the patent:
**26.08.2020  Bulletin 2020/35**

(51) Int Cl.:
***G02C 7/04*** *(2006.01)*      ***B29D 11/00*** *(2006.01)*
***G02C 7/08*** *(2006.01)*

(21) Application number: **17822430.9**

(86) International application number:
**PCT/GB2017/053764**

(22) Date of filing: **15.12.2017**

(87) International publication number:
**WO 2018/109492 (21.06.2018 Gazette 2018/25)**

(54) **CONTACT LENSES WITH INCORPORATED COMPONENTS**

KONTAKTLINSEN MIT INTEGRIERTEN KOMPONENTEN

LENTILLES DE CONTACT À COMPOSANTS INCORPORÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2016  US 201662435090 P**

(43) Date of publication of application:
**23.10.2019  Bulletin 2019/43**

(73) Proprietor: **CooperVision International Holding
Company, LP
St Michael (BB)**

(72) Inventors:
• **MARULLO, Rachel**
  **Pleasanton, California 94588 (US)**
• **TRAN, Victoria**
  **Pleasanton, California 94588 (US)**

(74) Representative: **Abel & Imray
Westpoint Building
James Street West
Bath BA1 2DA (GB)**

(56) References cited:
**EP-A2- 2 875 939      US-A1- 2014 002 789**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### FIELD

The field of the invention relates to the manufacture of hydrogel contact lenses with incorporated components.

### BACKGROUND

Wearable electronics have received widespread attention in recent years. Of particular note are so-called "electronic contact lenses" having incorporated electrical components that provide the lenses with a desired added functionality. Many applications for electronic contact lenses have been proposed, such as lenses provided with a sensor that can detect glucose levels of a diabetic patient (see, for example, U.S. Patent Application Publication No. 2014/0200424) or the intraocular pressure of a glaucoma patient (see, for example, U.S. Patent Application Publication No. 2010/234717). In another example, a contact lens can include an electroactive device with an optical property that is alterable with the application of electrical energy (see, for example, U.S. Patent No. 8,215,770). Such electronic lenses have potential application for the correction of vision errors, such as presbyopia, where a continuous range of focus (i.e. from near distance to far distance) is desired for patients who exhibit reduced accommodative abilities.

Commercially-available contact lenses made from silicone hydrogels are preferred over lenses made from other materials because they are generally more comfortable and have higher oxygen permeability, which is important for ocular health. Consequently, there is a desire to be able to incorporate electronic components into silicone hydrogel materials. In vivo testing of a silicone hydrogel contact lens with a functional single pixel display attached to the surface of the lens has been reported (see Lee et al. Nano Lett. 2013, 13, 2814-2821). It would be desirable to incorporate an electronic component into the bulk of the lens rather than attaching it to the lens surface in order to minimize the possibility of the device causing irritation to the eye or other unwanted outcome.

Hydrogel contact lenses are typically made by a cast molding process in which a polymerizable composition is dispensed into a contact lens mold and subjected to curing conditions, such as UV light or heat. The resulting lens is removed from the mold and hydrated to form a hydrogel, which typically comprises from about 20% to 70% water by weight. During the hydration process the lens may swell appreciably in size. A non-swelling component that is incorporated into the lens during the curing step can cause uneven swelling of the silicone material upon hydration resulting in damaged or distorted lenses that are unsuitable for their intended use. The incorporation of expandable electronic circuits into hydrogel contact lenses is one approach that has been described for preventing distortion during hydration of contact lenses (see PCT Patent Publication No. WO2016/022665). However, not all components desired for incorporation into hydrogel contact lenses are amenable to an expandable configuration. Therefore, additional approaches for preventing distortion of hydrogel contact lenses containing non-expandable components is desired.

Additional background publications include U.S. Pat. No. 8,874,182 and U.S. Pat. No. 9,054,079. US 2014/002789 and EP 2 875 939 disclose contact lenses with objects embedded in hydrogel lens bodies formed from a silicone-containing component, which is a monomer, macromer or prepolymer comprising a polymerisable group.

### SUMMARY

The present invention provides a contact lens as defined in claim 1 and a method of manufacturing a contact lens as defined in clam 9. In one aspect, the contact lens is a distortion-free contact lens. In some examples, the hydrogel lens body has a percent swell of at least 5% to about 30%.

In some examples, the hydrogel lens body is formed by curing a polymerizable hydrogel composition comprising from 25 wt.% up to 75 wt.% of N-vinyl-N-methyl acetamide, or N-vinyl pyrrolidone, or a combination thereof. In some examples, the non-expandable object is located in a cavity within the hydrogel lens body.

### DETAILED DESCRIPTION

Described herein is a contact lens comprising a hydrogel lens body and a non-expandable object embedded within the lens body. When a polymerizable hydrogel composition is cured in the shape of a contact lens with an embedded non-expandable object, the lens may become distorted during hydration of the hydrogel. The physical interaction between the object and the lens material can cause uneven rates of swelling, which results in the distortion. A first aspect of the invention is based on the discovery that distortion can be prevented or significantly reduced by increasing the modulus of the lens material and/or decreasing the surface energy of the embedded object. In one example, the contact lens comprises a hydrogel lens body having a modulus (M) in units of megapascal (MPa), and a non-expandable object having a surface energy (SE) in units of millinewton per meter (mN/m), embedded within the lens body, wherein in following Formula: $X = SE/(M*100)$, $X$ is a value that is less than or equal to 1. The value X, referred to herein as the "bonding factor", indicates the propensity for the hydrogel lens body to physically interact with the non-expandable object in a manner that results in distortion. We have found the likelihood that an embedded component will distort a hydrogel lens body during hydration substantially decreases when the bonding factor equals one or less. In various examples, the bonding factor is less than 0.9, less than 0.75, or less than 0.5. In some examples, the bonding factor is from about 0.01, 0.05 or 0.1 up to about 0.5, 0.75, or 1.0.

The value used for the modulus, M, of the hydrogel lens body is determined using the method described in Example 1, in which the Young's modulus of a sample cut from a fully hydrated control hydrogel lens body is measured and is taken to be the M value of the contact lens for which the bonding factor is calculated. As used herein, a "control hydrogel lens body" does not contain an embedded non-expandable object, has an optical power of -1.00D, and is otherwise identical to the hydrogel lens body of the contact lens containing the non-expandable object for which the bonding factor is calculated. In other words, the control hydrogel lens body is made using the same polymerizable composition, contact lens mold material and mold design, and process conditions as the contact lens containing the embedded object.

The hydrogel lens body may be a conventional hydrogel or a silicone hydrogel. As used herein, a "conventional hydrogel" refers to a hydrogel material formed from a polymerizable composition comprising a hydrophilic monomer, such as 2-hydroxyethyl methacrylate (HEMA) or vinyl alcohol, optionally in combination with other monomers, and contains no siloxane. A "siloxane" is a molecule comprising at least one Si-O group. A "silicone hydrogel" refers to a hydrogel material formed from a polymerizable composition comprising at least one siloxane monomer and at least one hydrophilic monomer. Methods of making silicone hydrogel contact lenses are well known in the art (see, e.g., U.S. Pat. No. 8,129,442, U.S. Pat. No. 8,614,261, and U.S. Pat. No. 8,865,789). As used herein, a "polymerizable hydrogel composition" is a composition comprising at least one monomer, including a hydrophilic monomer, where the composition has not yet been subjected to conditions that result in polymerization of the monomers. A "monomer" refers to a molecule comprising a polymerizable carbon-carbon double bond (i.e. a polymerizable group) capable of reacting with other polymerizable group-containing molecules that are the same or different, to form a polymer or copolymer. The term monomer encompasses polymerizable pre-polymers and macromers, there being no size-constraint of the monomer unless indicated otherwise. The monomer may comprise a single polymerizable carbon-carbon double bond, or more than one polymerizable group, and thus have cross-linking functionality.

As will be appreciated by those of ordinary skill in the art, the modulus of a hydrogel lens body can depend on the polymerizable composition used to make the lens body. For example, increasing the amount of cross-linkable monomers in a polymerizable composition can increase the modulus of the resulting hydrogel lens body. The modulus of a hydrogel lens body can also vary depending on the selection of monomers used in the polymerizable composition. For example, replacing dimethylacrylamide (DMA) in a polymerizable composition with vinyl-N-methyl acetamide (VMA) can result in a hydrogel lens body having a decreased modulus.

In various examples, the modulus of the hydrogel lens body is at least 0.3 MPa, 0.4 MPa, 0.5 MPa, or 0.6 MPa. Typically, the modulus is less than about 5.0 MPa. In specific examples, the hydrogel lens body has a modulus of at least 0.3 MPa, 0.4 MPa or 0.5 MPa up to about 1.0 MPa, 1.5 MPa, 2.0 MPa, or about 2.5 MPa. Throughout this disclosure, when a series of lower limit ranges and a series of upper limit ranges are provided, all combinations of the provided ranges are contemplated as if each combination were specifically listed. For example, in the above listing of modulus ranges, all 9 possible modulus ranges are contemplated (i.e. 0.3 MPa to 1.0 MPa, 0.3 MPa to 1.5 MPa... 0.5 MPa to 1.5 MPa, and 0.5 MPa to 2.0 MPa). Also, throughout this disclosure, when a series of values is presented with a qualifier preceding the first value, the qualifier is intended to implicitly precede each value in the series unless context dictates otherwise. For example, for the modulus values listed above, it is intended that the qualifier "at least" implicitly precedes each of 0.4 MPa and 0.5 MPa.

The surface energy (SE) of an object to be embedded in a contact lens is determined by the Owens-Wendt method (D. Owens; R. Wendt, Estimation of the Surface Free Energy of Polymers, J. Appl. Polym. Sci: 13 (1969) 1741-1747) using PBS, formamide, and ethylene glycol as the testing solvents and a Kruss Drop Shape Analyzer (DSA-100) or equivalent analyzer, as described in Example 2. In various examples, the embedded object may have a surface energy (SE) of less than about 75 mN/m, 50 mN/m, or 40 mN/m. In various examples, the object has a surface energy (SE) of about 15 mN/m or 20 mN/m up to about 30 mN/m, 40 mN/m, 50 mN/m or 75 mN/m.

A second aspect of the invention is based on the discovery that the distortion caused by embedding an object in a silicone hydrogel contact lens can be prevented or significantly reduced when the silicone hydrogel lens body comprises an N-vinyl amide component. Thus a contact lens comprising a silicone hydrogel lens body and a non-expandable object embedded within the lens body may comprise an N-vinyl amide component, or may be characterized by a bonding factor of one or less, or may be characterized by both of these features (i.e. the hydrogel lens body comprises an N-vinyl amide component and is characterized by a bonding factor of one or less). Throughout this disclosure a reference to "an example" or "a specific example" or similar phrase, is intended to introduce additional features of the contact lenses or their method of manufacture (depending on context) that can be combined with any combination of previously-described or subsequently-described examples (i.e. features), unless a particular combination of features is mutually exclusive, or if context indicates otherwise.

As used herein, the term "N-vinyl amide component", refers to a polymer or copolymer formed from polymerization of an N-vinyl amide-containing monomer. As used herein, an "N-vinyl amide-containing monomer" is a hydrophilic monomer that contains a single N-vinyl polymerizable group and no other polymerizable group. Further, as used herein, a "hydrophilic monomer" is a monomer that is at least 5% soluble in water (i.e. at least 50 grams of the monomer is fully soluble in 1 liter of water at 20°C) as determined visibly using a standard shake flask method.

In some examples, the N-vinyl amide-containing monomer can be selected from N-vinyl-N-methyl acetamide (VMA), or N-vinyl pyrrolidone (NVP), or N-vinyl formamide, or N-vinyl acetamide, or N-vinyl-N-ethyl acetamide, or N-vinyl isopropylamide, or N-vinyl caprolactam, or N-vinyl-N-ethyl formamide, or any combination thereof. In another example, the N-vinyl amide component is provided by including an N-vinyl amide-containing polymer in the polymerizable composition (e.g. polyVMA, polyNVP, etc.). In this example, upon curing an interpenetrating polymer network (IPN) forms between the N-vinyl amide-containing polymer and the polymer(s) formed by curing the polymerizable composition.

In one example, the polymerizable composition comprises at least 10 wt.%, 15 wt.%, 20 wt.%, or 25 wt.% up to about 45 wt.%, 60 wt.%, or 75 wt.% of an N-vinyl amide-containing monomer. In a specific example, the polymerizable composition comprises from about 25 wt.% up to about 75 wt.% of VMA or NVP, or a combination thereof. The polymerizable composition may further comprise at least 10 wt.%, 20 wt.%, or 25 wt.% up to about 50 wt.%, 60 wt.%, or 70 wt.% of a siloxane monomer. Unless specified otherwise, as used herein, a given weight percentage (wt. %) of a component of the polymerizable composition is relative to the total weight of all polymerizable ingredients and IPN polymers in the polymerizable composition. The weight of the polymerizable composition contributed by components that do not form part of the hydrogel lens body are not included in the wt.% calculation. For example, a diluent, such as water, propanol, silicone oil, or the like, may be included in a polymerizable composition to improve miscibility or processability, and is removed during curing or post-polymerization processing and thus does not form part of the hydrogel lens body. As used herein, a given weight percentage of a particular class of component (e.g., hydrophilic monomer, siloxane monomer, N-vinyl amide-containing monomer, etc.) in the polymerizable composition equals the sum of the wt.% of each ingredient in the composition that falls within the class. Thus, for example, a polymerizable composition that comprises 25 wt.% NVP and 10 wt.% VMA and no other N-vinyl amide-containing monomer, is said to comprise 35 wt.% of N-vinyl amide-containing monomer.

In addition to N-vinyl amide-containing monomers, numerous other hydrophilic monomers suitable for use in polymerizable hydrogel compositions for contact lenses are known in the art (see, e.g., U.S. Pat. No. 8,129,442, U.S. Pat. No. 8,614,261, and U.S. Pat. No. 8,865,789). Non-limiting examples of hydrophilic monomers useful for contact lens formulations include 1,4-butanediol vinyl ether (BVE), ethylene glycol vinyl ether (EGVE), diethylene glycol vinyl ether (DEGVE), N,N-dimethylacrylamide (DMA), 2-hydroxyethyl methacrylate (HEMA), ethoxyethyl methacrylamide (EOEMA), ethylene glycol methyl ether methacrylate (EGMA), and combinations thereof.

The polymerizable composition may additionally comprise at least one cross-linking agent. As used herein, a "cross-linking agent" is a molecule having at least two polymerizable groups, which may be the same or different. Thus, a cross-linking agent can react with functional groups on two or more polymer chains so as to bridge one polymer to another. A variety of cross-linking agents suitable for use in silicone hydrogel polymerizable compositions are known in the field (see, e.g., U.S. Pat. No. 8,231,218, incorporated herein by reference). Examples of suitable cross-linking agents include, without limitation, lower alkylene glycol di(meth)acrylates such as triethylene glycol dimethacrylate and diethylene glycol dimethacrylate; poly(lower alkylene) glycol di(meth)acrylates; lower alkylene di(meth)acrylates; divinyl ethers such as triethyleneglycol divinyl ether, diethyleneglycol divinyl ether, 1,4-butanediol divinyl ether and 1,4-cyclohexanedimethanol divinyl ether; divinyl sulfone; di- and trivinylbenzene; trimethylolpropane tri(meth)acrylate; pentaerythritol tetra(meth)acrylate; bisphenol A di(meth)acrylate; methylenebis(meth)acrylamide; triallyl phthalate; 1,3-Bis(3-methacryloxypropyl)tetramethyldisiloxane; diallyl phthalate; and combinations thereof. As will be appreciated by those skilled in the art, the polymerizable composition may comprise additional polymerizable or non-polymerizable ingredients conventionally used in contact lens formulations such as one or more of a polymerization initiator, a UV absorbing agent, a tinting agent, an oxygen scavenger, a chain transfer agent, or the like.

After a polymerizable composition is cured it is typically washed in water and/or organic solvent to remove unreacted components from the cured material prior to packaging. This processing step is referred to as extraction and hydration or "E&H". We have found that the distortion-reducing features of the present invention are particularly useful when the hydrogel lens body undergoes significant swelling during the E&H process. As used herein, the "percent swell" (% swell) of the a hydrogel lens body is determined by the formula: $(D_w - D_d/D_w) \times 100$, where $D_d$ is the chord diameter of a dry (unwashed) control hydrogel lens body, and $D_w$ is the chord diameter of a control hydrogel lens body after it has been washed and fully hydrated. In various examples, the hydrogel lens body has a percent swell of at least 2%, 5%, 10%, or 15%, and up to about 20%, 25%, 30%, or 50%. The percent swell of a hydrogel lens body may be varied by varying the amount of cross-linking agents included in the hydrogel polymerizable composition, where decreasing the amount of cross-linking agents generally increases the percent swell of the resulting hydrogel lens body. The percent swell of a hydrogel lens body may be decreased by including organic diluents in the polymerizable composition that are removed during E&H and replaced by water.

In various examples, the hydrogel lens body has an equilibrium water content (EWC) of at least about 10 wt. %, 20 wt.%, or 30 wt.%, and up to about 40 wt.%, 50 wt.%, or 70 wt.%. To measure EWC, excess surface water is wiped off of a fully hydrated control hydrogel lens body and the hydrogel lens body is weighed to obtain the hydrated weight. The hydrogel lens body is then dried in an oven at 80° C under a vacuum, and weighed. The weight difference is determined by subtracting the weight of the dry hydrogel lens body from the weight of the hydrated hydrogel lens body. The wt. % EWC of the hydrated hydrogel lens body = (weight difference/hydrated weight) x 100.

At least one non-expandable object is embedded within the hydrogel lens body. As used herein, the term "non-expandable object" refers to an object that does not swell appreciably when immersed in water or ethanol (e.g. 2 ml deionized water or ethanol at 25°C for 1 hour) and has dimensions that do not increase upon normal processing conditions (e.g. hydration, extraction, and consequent swelling) of the hydrogel lens body in which it is embedded. In other words, the length, diameter, and thickness of the object remain constant whether the hydrogel lens body is in a dry or hydrated state. As used herein dimensions that increase or decrease by 1% or less are considered to be constant. In some examples, a non-expandable object may have dimensions that change upon the application of a stimulus (e.g. an electrical or mechanical stimulus), such as a liquid lens that changes shape to change optical power. For avoidance of doubt, the term "object" refers to anything that is visible (i.e. macroscopic) and stable in form. Thus, for example, molecular components of a hydrogel formulation are not objects.

The non-expandable object is generally relatively thin to allow it to fit within the dimensions of a contact lens. In some examples, the embedded non-expandable object may have a thickness of from about 10 μm, 25 μm, or 50 μm up to about 100 μm, 150 μm, or 200 μm. In some examples, the thickness of the non-expandable object is less than the thickness of the hydrogel lens body. In some examples, the thickness of the hydrogel lens body portion of the contact lens at its thickest cross-section may be about 40 μm, 60 μm, 80 μm, or 100 μm, and up to about 200 μm, 250 μm, or 300 μm. In various examples, the combined thickness of the hydrogel lens body and the non-expandable object at its thickest cross-section may be about 50 μm, 75 μm, 100 μm, 150 μm, or 200 μm up to about 250 μm, 300 μm, or 400 μm.

As used herein, a non-expandable object is considered to be "embedded" within a hydrogel lens body if at least a portion of the object is located below the surface of the hydrogel lens body. In some examples, at least, 25%, 50%, 75%, 80%, 90%, 95% or 99% of the surface area of the object is in contact with or facing the hydrogel lens body. In some examples, the entire object is embedded (e.g., fully embedded or fully encapsulated) within the hydrogel lens body such that no part of the object is exposed at an outer surface of the lens body. In some examples the surface area of the non-expandable object embedded within the hydrogel lens body is at least about 5 mm$^2$, 10 mm$^2$, 25 mm$^2$, or 50 mm$^2$ up to about 100 mm$^2$, 150 mm$^2$, or 200 mm$^2$. In some examples, an "embedded" object is one that is placed in contact with the polymerizable hydrogel composition and becomes embedded within the hydrogel lens body when it is cured. In some examples the object is fully embedded within the hydrogel lens body. In some examples, the non-expandable object is fully embedded within the hydrogel and the thickness (i.e. cross section) of fully hydrated hydrogel surrounding the object is at least 20 μm, 50 μm, 75 μm, 100 μm, or 125 μm and up to about 200 μm, 250 μm or 300 μm. Thus, for example, if an object fully embedded in a hydrated hydrogel lens body has a 50 μm thick layer of hydrogel on its posterior side and 150 μm thick layer of hydrogel on its anterior side it is understood that the object is embedded within a hydrogel lens body having a thickness of 200 μm. Thus, in this context, the thickness of the hydrogel lens body does not include the thickness contributed by the non-expandable object. In some examples the total center thickness (CT) of the contact lens when fully hydrated may be from about 50 μm, 75 μm, 100 μm, or 125 μm, up to about 200 μm, 250 μm, 300 μm, 350 μm, or 400 μm, where the embedded non-expandable object (if located in the optic zone) and the hydrogel lens body may both contribute to the total thickness of the contact lens.

The non-expandable object can comprise at least one electronic component. As used herein, the term "electronic component" encompasses any component that can be used in an electronic contact lens. For example, the electronic component can comprise one or more of a wire, a capacitor, an inductor, a resistor, a diode, a light emitting diode (LED), a transistor, an antenna, a battery, an integrated circuit, a chip, an electrode, a heat sink, or the like. Other non-limiting examples of electronic components that may be included in contact lenses have been described in the patent literature (see e.g. U.S. Pat. No. 8,348,422, U.S. Pat. No. 8,348,424, U.S. Pat. No. 9,176,332, and WO2016/076523). In one example, the non-expandable object comprises an annular insert that surrounds the optic zone of the contact lens, such as the "media insert" described in U.S. Pat. No. 9,225,375. In another example, the non-expandable object comprises an insert that functions as a variable-focus lens, for example, as described in U.S. Patent No 8,348,424. In one example, the non-expandable object comprises an electronic component having a surface coating that functions as a barrier to protect the electronic component from the aqueous environment of the hydrogel. In one example, the surface coating comprises a non-swellable polymer such as polyimide, parylene, polydimethylsiloxane, polyethylene terephthalate, polyethylene naphthalate, polyphenylene sulfide or other polymer film.

An aspect of the invention is a method of manufacturing a contact lens, wherein the method comprises curing a polymerizable hydrogel composition and a non-expandable object to form a hydrogel lens body having a modulus (M) and a non-expandable object having a surface energy (SE) embedded within the lens body, wherein the hydrogel lens body comprises an N-vinyl amide component, and/or is characterized by a bonding factor, X, of one or less, wherein X is calculated using Equation I above.

In one example, the method comprises cast molding, in which the polymerizable hydrogel composition and the non-expandable object are cured in a contact lens mold assembly and subjected to curing conditions to form a contact lens comprising the non-expandable object embedded in a hydrogel lens body. Briefly, the polymerizable hydrogel composition and the non-expandable object are placed in a casting "cup" referred to as a "female mold member" defining the front (i.e. anterior) surface of the contact lens. In some examples, the polymerizable hydrogel composition is dispensed into the female mold member, then the non-expandable object is placed on the hydrogel composition, and more polymerizable hydrogel composition is placed on top of the object. In other examples, placement of the object into a predefined position within the contact lens may involve the use of a positioning device within the contact lens mold assembly. For example, a pedestal or other support structure made from the polymerizable hydrogel composition that has already been cured, but remains unhydrated, may be adhered to the female mold member. The non-expandable object may be placed on the support structure prior to dispensing the polymerizable composition into the mold. In other examples, a portion of the polymerizable composition may be cured or partially cured in the female mold member and the non-expandable object is positioned on the cured or partially cured hydrogel. Next, the remainder of the polymerizable composition is dispensed into the mold. After the polymerizable composition and non-expandable object are placed in the female mold member, a male mold member defining the back (i.e. posterior) surface of the contact lens is coupled with the female mold member to form a contact lens mold assembly having a lens-shaped area therebetween in which the polymerizable composition and the non-expandable objected are sandwiched and cured to form a lens-shaped hydrogel lens body.

The polymerizable hydrogel composition within the contact lens mold assembly is polymerized using any suitable curing method. Typically, the polymerizable composition is exposed to polymerizing amounts of heat or ultraviolet light (UV). In the case of UV-curing, also referred to as photopolymerization, the polymerizable composition typically comprises a photoinitiator such as benzoin methyl ether, 1 -hydroxycyclohexylphenyl ketone, Darocur or Irgacur (available from Ciba Specialty Chemicals). Photopolymerization methods for contact lenses are described in U.S. Pat. No. 5,760,100. In the case of heat-curing, also referred to as thermal curing, the polymerizable composition typically comprises a thermal initiator. Exemplary thermal initiators include 2,2'-azobis(2,4-dimethylpentanenitrile) (VAZO-52), 2,2'-Azobis(2-methylpropanenitrile) (VAZO-64), and 1,1'-azo bis(cyanocyclohexane) (VAZO-88). Methods for cast molding contact lenses are well-known in the art (see e.g. U.S. Pat. No. 8,614,261, U.S. Pat. No. 8,865,789, and U.S. Pat. No. 8,979,261).

After curing, the mold assembly is separated to provide a hydrogel lens body and a non-expandable object embedded within the lens body. Methods for removing contact lenses from their molds, commonly referred to as "delensing", are well-known in the art (see e.g. U.S. Pat. No. 8,865,789, and U.S. Pat. No. 8,979,261). In some examples, a delensing process may involve the use of water or other liquid (wet-delensing) which hydrates or partially hydrates the lens and lifts it off from a mold member to which it is adhered. In other examples, a delensing process may be dry. It will be appreciated by those skilled in the art that other methods, such as lathing, may be used instead of cast molding, for obtaining a lens-shaped hydrogel lens body with a non-expandable object embedded therein. Various methods for lathing hydrogel contact lenses are known in the art (see e.g. U.S. Pat. No. 5,972,251, and U.S. Pat. No. 5,115,553).

After curing, the hydrogel lens body is typically washed to extract any unreacted or partially reacted ingredients from the hydrogel and hydrate the hydrogel. The washing step can include contacting the hydrogel lens body with an organic solvent, such as a lower alcohol (e.g. methanol, ethanol, etc.), contacting the polymeric lens body with aqueous liquids that may or may not contain an organic solvents, or combinations thereof. Various suitable methods for washing contact lenses are well known in the art (see e.g. U.S. Pat. No. 8,231,218 and EP Pat. No. 2969497).

Selecting the hydrogel lens body and non-expandable object to provide a bonding factor of one or less, as described above, reduces the likelihood that shape distortion will occur upon hydration of the hydrogel, thereby providing distortion-free contact lenses. As used herein, the term "distortion-free" means that the hydrogel lens body is free of defects such as tears, is lens-shaped, and is not misshapen (i.e. the lens body has an appropriate lens shape with no wavy edges, curling, folding or surface indentations) as viewed from a contact lens dimension analyser (e.g. Optimec model JCF). In some examples, a washing liquid, such as an organic solvent that more rapidly hydrates the hydrogel, relative to the use of a washing liquid that consists essentially of water, results in more even swelling of the hydrogel lens body, which may assist in the production of distortion-free lens. As the hydrogel lens body swells during the hydration step, it may pull away from the non-expandable object thereby forming a space between the object and the hydrogel such that the object is located in a cavity within the hydrogel lens body. The size of this cavity can depend on the percent swell of the lens material, where hydrogels having a higher percent swell tend to result in more space. In a packaged state, the space tends to fill with the packaging solution used to store the contact lens.

After washing, and any optional process step(s) (for example, surface modification to attach a beneficial agent or a lubricious coating), the final contact lens product is placed in a blister package, glass vial, or other appropriate container, all referred to herein as "packages." Typically, packaging solution is also added to the container. Suitable packaging solutions include phosphate- or borate-buffered saline together with any optional additional ingredients such as a comfort agent, a medication, a surfactant to prevent the lens from sticking to its package, or the like. The package is sealed, and the sealed contact lens body is sterilized by radiation, heat, or steam (for example, autoclaving), gamma radiation, e-beam radiation, or the like. In some examples, the contact lens may be packaged under sterile conditions, making a post-packaging sterilization step unnecessary.

The following Examples illustrate certain aspects and advantages of the present invention, which should be understood not to be limited thereby.

**Example 1: Modulus Determination**

Young's modulus is determined by an ANSI Z80.20 standard using an Instron Model 3342 or Model 3343 mechanical testing system (Instron Corporation, Norwood, MA, USA) and Bluehill Materials Testing Software. A control silicone hydrogel lens body is soaked in 4mL phosphate buffered saline (PBS) for 30 minutes prior to testing. While holding the lens concave side up, a central strip of the lens is cut using a contact lens cutting die having clean and sharp blades to provide a 4 mm wide generally rectangular strip of the material that is defect-free along the cutting edges. The length of the strip is about 14-15 mm, that is, about the diameter of the contact lens before being cut. The thickness of the strip is measured using a calibrated gauge (for example, Rehder electronic thickness gauge, Rehder Development Company, Castro Valley, CA, USA) at the following angles: -8°, -4°, 0°, 4°, and 8°. The average of the 5 measurements is taken without correcting the values for compression of the sample. Using tweezers, the strip is loaded into the grips of the calibrated Instron apparatus, with the strip fitting over at least 75% of the grip surface of each grip; the gap distance between the grips is 5.0 mm. The modulus is determined inside a humidity chamber having a relative humidity of at least 70% at room temperature (about 22°C) at a pull rate of 10.00 mm/min. The modulus is defined as the beginning upward slope of the recorded curve.

**Example 2: Surface Energy Determination**

The surface to be measured (i.e. the surface of the object to be incorporated into a contact lens, or a sample of the material used to make the surface of the object) is cleaned by wiping it with a cleaning solvent such as acetone or 70% IPA/30% $H_2O$. The surface is then dried with low pressure compressed air for 10-20 seconds and subjected to an anti-static device. A 3 $\mu$l volume drop of each liquid (formamide (Sigma, reagent >99.5%), PBS, and ethylene glycol (Sigma, anhydrous, > 99.8%)) is dispensed onto the surface and the sessile drop contact angle is measured after 5 seconds using a Kruss Drop Shape Analyzer (DSA-100). The average (n=5) contact angle for each liquid is used in the surface energy calculation. Measurements are performed at room temperature (between 21° to 24° C).

The Kruss Drop Shape Analysis Software, Version 1.92.1.1 (or equivalent) calculates SE based on the Owens-Wendt model. For the above liquids, the software uses the following values: PBS: interfacial tension (IFT) = 73.2 mN/m (disperse part ($\sigma_L{}^D$) = 27.93 mN/m, polar part ($\sigma_L{}^P$) = 45.28 mN/m); Ethylene glycol: IFT = 46.8 mN/m ($\sigma_L{}^D$ = 28.3 mN/m, $\sigma_L{}^P$ = 18.5 mN/m); and Formamide: IFT= 58.2 mN/m ($\sigma_L{}^D$ = 36.3 mN/m, $\sigma_L{}^P$ = 21.9 mN/m). After the average contact angle ($\theta$) of each liquid on the solid substrate is determined, a data point for each liquid is plotted on a graph of [$\sigma_L$(cos $\theta$ + 1)]/[2$(\sigma_L{}^D)^{1/2}$] versus $(\sigma_L{}^P)^{1/2}/(\sigma_L{}^D)^{1/2}$. A best linear fit is drawn through the data. The intercept of this line is $(\sigma_S{}^D)^{1/2}$, and the slope is $(\sigma_S{}^P)^{1/2}$. The total solid surface energy ($\sigma_S$) is the sum of the polar solid surface energy component ($\sigma_S{}^P$) and the disperse solid surface energy component ($\sigma_S{}^D$).

**Example 3: Adjusting modulus to reduce distortion.**

Four silicone hydrogel formulations, A-D, were made by mixing together about 9 parts (by weight) of a hydrophilic bimethacryloxypropyl functional polysiloxane macromonomer having an average molecular weight of about 15,000 (as described in U.S. Patent No. 8,129,442), 27 parts of a monomethacryl functional polysiloxane monomer having a molecular weight of about 583 (Cas No. 102075-57-6, described in U.S. Patent No. 8,168,735), 42 parts VMA, 6 parts ethylene glycol methyl ether methacrylate, and 13 parts methyl methacrylate. Each formulation also contained minor amounts of a crosslinking reagent, a chain transfer reagent, and a thermal initiator. A second crosslinking agent was added to formulations B, C and D, in amounts of about 0.4 parts, 0.7 parts, and 1.5 parts, respectively, in order to achieve silicone hydrogel lens bodies with modulus values ranging from 0.15 MPa up to 2.2 MPa, as shown in Table 1 below.

The compositions were individually dispensed into female polypropylene contact lens molds halves. A polyimide (PI) film of approximately 2 mm x 2 mm x 25 $\mu$m or a parylene (Par) film of approximately 2 mm x 2 mm x 8 $\mu$m was positioned within the dispensed compositions such that upon curing, the films were completely embedded within the lens body. Using the method described in Example 2, the surface energies of PI and Par were determined to be 42 mN/m and 32 mN/m, respectively. The male halves of the contact lens molds were combined with the female halves and placed in an $N_2$-purged oven to thermally cure the lenses at 55 °C, 80 °C, and 100°C, for 40 minutes at each increasing temperature. After curing, the mold halves were separated and the dry lens bodies were removed using tweezers. Each lens body was hydrated in 3 mL deionized water (DI $H_2O$) for 10 minutes without agitation, then visually inspected for distortion using an Optimec model JCF contact lens dimension analyzer. The lenses were then swelled in ethanol (EtOH) by placing each lens in 3 mL EtOH for 30 minutes - two exchanges, followed by placement in 3m1 of 50% EtOH (in DI $H_2O$) for 30 minutes, with three final exchanges in DI $H_2O$ for 10 minutes each exchange. Lenses were again visually inspected for distortion using the Optimec. The modulus and distortion results are shown in Table 1.

**Table 1:**

| Lens | Modulus (MPa) | Par-H20 | Par-EtOH | PI-H20 | PI-EtOH |
|------|---------------|---------|----------|--------|---------|
| A | 0.15 | ++ | ++ | ++ | ++ |
| B | 0.45 | ++ | - | + | ± |
| C | 0.66 | ++ | - | + | - |
| D | 2.2 | + | - | - | - |
| Key: - no distortion<br>± not round<br>+ significant distortion<br>++ severe distortion | | | | | |

The results demonstrate that distortion can be reduced or eliminated by using lens bodies having relatively high modulus, embedding an object having a relatively low surface energy, and/or by swelling the lenses in an organic solvent such as ethanol.

**Example 4: Presence of a vinyl amide component to reduce distortion.**

Four silicone hydrogel formulations, designated E-H, were made comprising about 38 parts (by weight) of a monomethacryloxypropyl functional polydimethylsiloxane, designated MCS-MLL (Gelest, Inc., Morrisville, PA, USA), about 21 parts methyl-di(trimethylsiloxy)-silyl propyl glycerol methacrylate (CAS 69861-02-5), and about 40 parts of either dimethylacrylamide (DMA) (Formulations E and F) or N-vinyl-N-methylacetamide (VMA) (Formulations G and H). Formulations E, F and H also contained the cross-linking agent, triethylene glycol dimethacrylate (TEGDMA), in amounts of 1%, 2.5%, and 0.6%, respectively, in order to increase the modulus of the resulting lenses to the values shown in Table 2. The formulations were cured with either PI or Par films embedded in the lens bodies, washed in water, inspected, and washed in ethanol, as described in Example 1 above. The distortion results are shown in Table 2.

**Table 2:**

| Lens | Modulus MPa | Par-H20 | Par-EtOH | PI-H20 | PI-EtOH |
|------|-------------|---------|----------|--------|---------|
| E | 0.68 | ++ | +++ | ++ | +++ |
| F | 1.24 | ++ | +++ | ++ | +++ |
| G | 0.81 | ++ | - | ± | +++ |
| H | 1.1 | + | - | ± | +++ |
| Key: - no distortion<br>± not round<br>+ significant distortion<br>++ severe distortion<br>+++ embedded object dislodged during swelling | | | | | |

The results demonstrate that substituting a non-vinyl amide hydrophilic monomer, such as DMA with a vinyl amide hydrophilic monomer, such as VMA, can reduce or eliminate the distortion caused by incorporating a non-expandable object in the lens body.

The disclosure herein refers to certain illustrated examples, it is to be understood that these examples are presented by way of example and not by way of limitation.

**Claims**

1. A contact lens comprising:

    a. a hydrogel lens body having a Young s modulus (M); and
    b. a non-expandable object having a surface energy (SE) embedded within the hydrogel lens body,

    wherein the hydrogel of the hydrogel lens body is a silicone hydrogel; the hydrogel lens body is formed from a polymerisable composition comprising at least 10 wt% hydrophilic N-vinyl amide-containing monomer that contains a single N-vinyl polymerizable group and no other polymerizable group, the hydrogel lens body comprises an N-vinyl amide component, which is a polymer or copolymer of the hydrophilic N-vinyl amide-containing monomer; and wherein the hydrogel lens body is **characterized by** a bonding factor, X, of 0.01 to 1.0, wherein X is calculated using Equation I:

$$X = SE/(M*100) \qquad\qquad (I)$$

    wherein M is in units of megapascal (MPa) and is determined using the ANSI Z80.20 standard method described in Example 1 of the description, and SE is in units of millinewton per meter (mN/m) and is determined using the Owens-Wendt method as described in Example 2 of the description.

2. The contact lens of claim 1, wherein the hydrogel lens body has a percent swell of at least 5% to 30%and/or an equilibrium water content of 10% to 50%.

3. The contact lens of claim 1 or claim 2, wherein the modulus (M) of the hydrogel lens body is at least 0.5 MPa, wherein the surface energy (SE) of the non-expandable object is less than 40 mN/m, and/or wherein X in Formula I is less than 0.75.

4. The contact lens of any preceding claim, wherein the non-expandable object has a surface area of at least 5 mm$^2$.

5. The contact lens of any preceding claim, wherein the non-expandable object comprises at least one electronic component.

6. The contact lens of any preceding claim, wherein the non-expandable object comprises a surface coating, optionally selected from polyimide, polydimethylsiloxane, and parylene.

7. The contact lens of any preceding claim, wherein the non-expandable object comprises a lens.

8. The contact lens of any preceding claim, wherein the non-expandable object is located in a cavity within the hydrogel lens body.

9. A method of manufacturing a contact lens, said method comprising:

    a. contacting a non-expandable object having a surface energy (SE) with a polymerizable hydrogel composition comprising at least 10 wt% of a hydrophilic N-vinyl amide-containing monomer that contains a single N-vinyl polymerizable group and no other polymerizable group;
    b. curing the polymerizable hydrogel composition and forming a hydrogel lens body having a Young's modulus (M) with the non-expandable object embedded within the hydrogel lens body; and
    c. washing the hydrogel lens body with a washing liquid to form a contact lens comprising a hydrated hydrogel lens body and a non-expandable object embedded within the washed hydrogel lens body,

    wherein the hydrogel of the hydrogel lens body is a silicone hydrogel and the hydrogel lens body comprises an N-vinyl amide component, which is a polymer or copolymer of the hydrophilic N-vinyl amide-containing monomer, and is **characterized by** a bonding factor, X, of 0.01 to 1.0, wherein X is calculated using Equation I:

$$X=SE/(M*100) \qquad\qquad (I)$$

wherein M is in units of megapascal (MPa) and is determined using the ANSI Z80.20 standard method described in Example 1 of the description, and SE is in units of millinewton per meter (mN/m) and is determined using the Owens-Wendt method as described in Example 2 of the description.

10. The method of claim 9, wherein the hydrogel lens body is formed by cast molding, or wherein the hydrogel lens body is formed by lathing.

11. The method of claim 9 or claim 10, wherein the hydrogel lens body has a percent swell of at least 5% to about 30%.

12. The method of any one of claims 9 to 11, wherein the washing liquid comprises an organic solvent.

13. The method of any one of claims 9 to 12, wherein the hydrogel lens body has an equilibrium water content of 10% to 50%.

14. The method of any one of claims 9 to 13, wherein the polymerizable hydrogel composition comprises N-vinyl-N-methyl acetamide (VMA), or N-vinyl pyrrolidone (NVP), or N-vinyl formamide, or N-vinyl acetamide, or N-vinyl-N-ethyl acetamide, or N-vinyl isopropylamide, or N-vinyl caprolactam, or N-vinyl-N-ethyl formamide, or any combination thereof, especially from 25 wt.% up to 75 wt.% of VMA or NVP, or a combination thereof.

15. The method of any one of claims 9 to 14, wherein during the washing step a space forms between the non-expandable object and the hydrogel lens body such that the non-expandable object is located in a cavity within the hydrogel lens body.

**Patentansprüche**

1. Kontaktlinse, umfassend:

    a. einen Hydrogel-Linsenkörper mit einem Elastizitätsmodul (M); und
    b. ein nicht expandierbares Objekt mit einer Oberflächenenergie (SE), das in den Hydrogel-Linsenkörper eingebettet ist,

wobei das Hydrogel des Hydrogel-Linsenkörpers ein SilikonHydrogel ist; der Hydrogel-Linsenkörper aus einer polymerisierbaren Zusammensetzung gebildet ist, die mindestens 10 Gew.-% hydrophiles N- Vinylamid enthaltendes Monomer umfasst, das eine einzelne polymerisierbare N-Vinylgruppe und keine andere polymerisierbare Gruppe enthält, wobei der Hydrogel-Linsenkörper eine N-Vinylamid Komponente enthält, die ein Polymer oder Copolymer des hydrophilen N-Vinylamid enthaltenden Monomers ist; und wobei der Hydrogel-Linsenkörper durch einen Bindungsfaktor X von 0,01 bis 1,0 gekennzeichnet ist, worin X unter Verwendung von Gleichung I berechnet wird:

$$X = SE / (M \cdot 100) \quad (I)$$

wobei M in Einheiten von Megapascal (MPa) angegeben ist und unter Verwendung des in Beispiel 1 der Beschreibung beschriebenen ANSI Z80.20-Standardverfahrens bestimmt wird, und SE in Einheiten von Millinewton pro Meter (mN/m) angegeben wird und unter Verwendung der Owens-Wendt-Methode wie in Beispiel 2 der Beschreibung beschrieben bestimmt wird.

2. Kontaktlinse nach Anspruch 1, wobei der Hydrogel-Linsenkörper eine prozentuale Quellung von mindestens 5% bis 30% und/oder einen Gleichgewichtswassergehalt von 10% bis 50% aufweist.

3. Kontaktlinse nach Anspruch 1 oder Anspruch 2, wobei das Modul (M) des Hydrogel-Linsenkörpers mindestens 0,5 MPa beträgt, wobei die Oberflächenenergie (SE) des nichtexpandierbaren Objekts weniger als 40 mN/m beträgt, und/oder wobei X in der Formel I kleiner als 0,75 ist.

4. Kontaktlinse nach einem der vorhergehenden Ansprüche, wobei das nicht expandierbare Objekt einen Oberflächenbereich von mindestens 5 mm² aufweist.

5. Kontaktlinse nach einem der vorhergehenden Ansprüche, wobei das nicht expandierbare Objekt mindestens eine elektronische Komponente aufweist.

6. Kontaktlinse nach einem der vorhergehenden Ansprüche, wobei das nicht expandierbare Objekt eine Oberflächenbeschichtung umfasst, gegebenenfalls ausgewählt aus Polyimid, Polydimethylsiloxan, und Parylen.

7. Kontaktlinse nach einem der vorhergehenden Ansprüche, wobei das nicht expandierbare Objekt eine Linse umfasst.

8. Kontaktlinse nach einem der vorhergehenden Ansprüche, wobei sich das nicht expandierbare Objekt in einem Hohlraum innerhalb des Hydrogel-Linsenkörpers befindet.

9. Verfahren zur Herstellung einer Kontaktlinse, wobei das Verfahren umfasst:

a. Inkontaktbringen eines nicht expandierbaren Objekts mit einer Oberflächenenergie (SE) mit einer polymerisierbaren Hydrogelzusammensetzung, umfassend mindestens 10 Gew.-% eines hydrophilen N-Vinylamid enthaltenden Monomers, das eine einzelne polymerisierbare N-Vinylgruppe und keine andere polymerisierbare Gruppe enthält;
b. Härten der polymerisierbaren Hydrogelzusammensetzung und Bilden eines Hydrogel-Linsenkörpers mit einem Elastizitätsmodul (M) mit dem nicht expandierbaren Objekt, das in dem Hydrogel-Linsenkörper eingebettet ist; und
c. Waschen des Hydrogel-Linsenkörpers mit einer Waschflüssigkeit, um eine Kontaktlinse zu bilden, die einen hydratisierten Hydrogel-Linsenkörper und ein nicht expandierbares Objekt umfasst, das in dem gewaschenen Hydrogel-Linsenkörper eingebettet ist;

wobei das Hydrogel des Hydrogel-Linsenkörpers ein Silikonhydrogel ist und der Hydrogel-Linsenkörper eine N-Vinylamid-Komponente umfasst, die ein Polymer oder Copolymer des hydrophilen N-Vinylamid-enthaltenden Monomers ist, und durch einen Bindungsfaktor X von 0,01 bis 1,0 gekennzeichnet ist,
worin X unter Verwendung von Gleichung I berechnet wird:

$$X = SE \ / \ (M \cdot 100) \ (I)$$

wobei M in Einheiten von Megapascal (MPa) angegeben ist und unter Verwendung des in Beispiel 1 der Beschreibung beschriebenen ANSI Z80.20-Standardverfahrens bestimmt wird, und SE in Einheiten von Millinewton pro Meter (mN/m) angegeben wird und unter Verwendung der Owens-Wendt-Methode wie in Beispiel 2 der Beschreibung beschrieben bestimmt wird.

10. Verfahren nach Anspruch 9, wobei der Hydrogel-Linsenkörper durch Gießformen gebildet ist, oder wobei der Hydrogel-Linsenkörper durch Drehen gebildet ist.

11. Verfahren nach Anspruch 9 oder Anspruch 10, wobei der Hydrogel-Linsenkörper eine prozentuale Quellung von mindestens 5% bis etwa 30% aufweist.

12. Verfahren nach einem der Ansprüche 9 bis 11, wobei die Waschflüssigkeit ein organisches Lösungsmittel umfasst.

13. Verfahren nach einem der Ansprüche 9 bis 12, wobei der Hydrogel-Linsenkörper einen Gleichgewichtswassergehalt von 10% bis 50% aufweist.

14. Verfahren nach einem der Ansprüche 9 bis 13, wobei die polymerisierbare Hydrogel-Zusammensetzung N-Vinyl-N-methylacetamid (VMA) oder N-Vinylpyrrolidon (NVP) oder N-Vinylformamid oder N-Vinylacetamid oder N-Vinyl-N-ethylacetamid oder N-Vinylisopropylamid oder N-Vinylcaprolactam oder N-Vinyl-N-ethylformamid oder eine beliebige Kombination davon, insbesondere von 25 Gew.-% bis 75 Gew.-% VMA oder NVP oder eine Kombination davon umfasst.

**15.** Verfahren nach einem der Ansprüche 9 bis 14, wobei sich während des Waschschritts ein Raum zwischen dem nicht expandierbaren Objekt und dem Hydrogel-Linsenkörper so bildet, dass das nicht expandierbare Objekt in einem Hohlraum innerhalb des Hydrogel-Linsenkörpers angeordnet ist.

**Revendications**

**1.** Lentille de contact comprenant :

   a. un corps de lentille en hydrogel ayant un module de Young (M) et
   b. un objet non expansible ayant une énergie de surface (SE) incorporé à l'intérieur du corps de lentille en hydrogel,

   dans laquelle l'hydrogel du corps de lentille en hydrogel est un hydrogel de silicone, le corps de lentille en hydrogel étant formé à partir d'une composition polymérisable comprenant au moins 10 % en poids d'un monomère contenant du N-vinyl amide hydrophile qui contient un groupe polymérisable N-vinyl unique et aucun autre groupe polymérisable, le corps de lentille en hydrogel comprenant un composant N-vinyl amide, qui est un polymère ou un copolymère du monomère contenant du N-vinyl amide hydrophile et dans laquelle le corps de lentille en hydrogel est **caractérisé par** un facteur de liaison, X, de 0,01 à 1,0,
   dans laquelle X est calculé en utilisant l'équation I :

$$X = SE/(M*100) \qquad\qquad (I)$$

   dans laquelle M est en unités de mégapascal (MPa) et est déterminé en utilisant la méthode normalisée ANSI Z80.20 décrite dans l'Exemple 1 de la description et SE est en unités de millinewton par mètre (mN/m) et est déterminé en utilisant la méthode Owens-Wendt comme cela est décrit dans l'Exemple 2 de la description.

**2.** Lentille de contact selon la revendication 1, dans laquelle le corps de lentille en hydrogel a un pourcentage de gonflement d'au moins 5 % à 30 % et/ou une teneur en eau d'équilibre de 10 % à 50 %.

**3.** Lentille de contact selon la revendication 1 ou 2, dans laquelle le module (M) du corps de lentille en hydrogel est au moins 0,5 MPa, dans laquelle l'énergie de surface (SE) de l'objet non expansible est inférieure à 40 mN/m et/ou dans laquelle X dans la Formule I est inférieur à 0,75.

**4.** Lentille de contact selon l'une quelconque des revendications précédentes, dans laquelle l'objet non expansible a une aire de surface d'au moins 5 mm$^2$.

**5.** Lentille de contact selon l'une quelconque des revendications précédentes, dans laquelle l'objet non expansible comprend au moins un composant électronique.

**6.** Lentille de contact selon l'une quelconque des revendications précédentes, dans laquelle l'objet non expansible comprend un revêtement de surface, facultativement sélectionné parmi un polyimide, le polydiméthylsiloxane, et le parylène.

**7.** Lentille de contact selon l'une quelconque des revendications précédentes, dans laquelle l'objet non expansible comprend une lentille.

**8.** Lentille de contact selon l'une quelconque des revendications précédentes, dans laquelle l'objet non expansible est situé dans une cavité à l'intérieur du corps de lentille en hydrogel.

**9.** Procédé de fabrication d'une lentille de contact, ledit procédé comprenant :

   a. la mise en contact d'un objet non expansible ayant une énergie de surface (SE) avec une composition en hydrogel polymérisable comprenant au moins 10 % en poids d'un monomère contenant du N-vinyl amide hydrophile qui contient un groupe polymérisable N-vinyl unique et aucun autre groupe polymérisable,
   b. le durcissement de la composition en hydrogel polymérisable et la formation d'un corps de lentille en hydrogel ayant un module de Young (M) avec l'objet non expansible incorporé à l'intérieur du corps de lentille en hydrogel et

c. le lavage du corps de lentille en hydrogel avec un liquide de lavage pour former une lentille de contact comprenant un corps de lentille en hydrogel hydraté et un objet non expansible incorporé à l'intérieur du corps de lentille en hydrogel lavé,

dans lequel l'hydrogel du corps de lentille en hydrogel est un hydrogel de silicone et le corps de lentille en hydrogel comprenant un composant N-vinyl amide, qui est un polymère ou un copolymère du monomère contenant du N-vinyl amide hydrophile, et est **caractérisé par** un facteur de liaison, X, de 0,01 à 1,0,

dans lequel X est calculé en utilisant l'équation I :

$$X = SE/(M*100) \qquad (I)$$

dans lequel M est en unités de mégapascal (MPa) et est déterminé en utilisant la méthode normalisée ANSI Z80.20 décrite dans l'Exemple 1 de la description, et SE est en unités de millinewton par mètre (mN/m) et est déterminé en utilisant la méthode Owens-Wendt comme cela est décrit dans l'Exemple 2 de la description.

10. Procédé selon la revendication 9, dans lequel le corps de lentille en hydrogel est formé par moulage par coulée, ou dans lequel le corps de lentille en hydrogel est formé par usinage.

11. Procédé selon la revendication 9 ou 10, dans lequel le corps de lentille en hydrogel a un pourcentage de gonflement d'au moins 5 % à environ 30 %.

12. Procédé selon l'une quelconque des revendications 9 à 11, dans lequel le liquide de lavage comprend un solvant organique.

13. Procédé selon l'une quelconque des revendications 9 à 12, dans lequel le corps de lentille en hydrogel a une teneur en eau d'équilibre de 10 % à 50 %.

14. Procédé selon l'une quelconque des revendications 9 à 13, dans lequel la composition d'hydrogel polymérisable comprend du N-vinyl-N-méthyl acétamide (VMA), ou de la N-vinyl pyrrolidone (NVP), ou du N-vinyl formamide, ou du N-vinyl acétamide, ou du N-vinyl-N-éthyl acétamide, ou du N-vinyl isopropylamide, ou du N-vinyl caprolactam, ou du N-vinyl-N-éthyl formamide, ou n'importe quelle combinaison de ceux-ci, en particulier de 25 % en poids jusqu'à 75 % en poids de VMA ou de NVP, ou d'une combinaison de ceux-ci.

15. Procédé selon l'une quelconque des revendications 9 à 14, dans lequel, pendant l'étape de lavage, un espace se forme entre l'objet non expansible et le corps de lentille en hydrogel de sorte que l'objet non expansible soit situé dans une cavité à l'intérieur du corps de lentille en hydrogel.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140200424
- US 2010234717
- US 8215770 B
- WO 2016022665 A
- US 8874182 B
- US 9054079 B
- US 2014002789 A
- EP 2875939 A
- US 8129442 B
- US 8614261 B
- US 8865789 B
- US 8231218 B
- US 8348422 B
- US 8348424 B
- US 9176332 B
- WO 2016076523 A
- US 9225375 B
- US 5760100 A
- US 8979261 B
- US 5972251 A
- US 5115553 A
- EP 2969497 A
- US 8168735 B

**Non-patent literature cited in the description**

- **LEE et al.** *Nano Lett.,* 2013, vol. 13, 2814-2821
- **D. OWENS ; R. WENDT.** Estimation of the Surface Free Energy of Polymers. *J. Appl. Polym. Sci,* 1969, vol. 13, 1741-1747
- *CHEMICAL ABSTRACTS,* 102075-57-6